# FASCICULE DE BREVET EUROPEEN

(11) **EP 0 995 274 B1**
(45) Date de publication et mention de la délivrance du brevet: **09.01.2002**
(21) Numéro de dépôt: 98935075.6
(22) Date de dépôt: 01.07.1998
(51) Int. Cl.: H04B 1/66, G10L 19/02

(54) **CODEUR AUDIO**
AUDIOKODIERER
AUDIO ENCODER

(30) Priorité: 10.07.1997 FR 9708784
(43) Date de publication de la demande: 26.04.2000
(73) Titulaire: Matra Nortel Communications, 29100 Quimper (FR)
(72) Inventeur: RICHARD, Gael, F-75010 Paris (FR); MURGIA, Carlo, Irvine, CA 92618 (US); LE DORE, Ariane, F-75015 Paris (FR); LOCKWOOD, Philip, F-95490 Vaureal (FR)
(74) Mandataire: Loisel, Bertrand
(86) Numéro de dépôt international: FR9801408
(87) Numéro de publication internationale: WO9903210

(56) Documents cités:
- US-A- 4 622 680
- US-A- 4 811 398
- US-A- 4 956 871

## Description

La présente invention concerne un codeur audio pour coder numériquement un signal audiofréquence, et plus particulièrement un codeur audio capable de coder efficacement différents types de signaux audio (parole, musique...).

La plupart des codeurs audio utilisés ont été conçus et optimisés pour un type de source de signal. Ainsi, les applications de téléphonie ont suscité le développement de codeurs de parole ayant une bonne qualité de codage à bas débit (moins de 10 kbit/s). Ces codeurs reposent sur une modélisation des organes de production de la parole. Leurs performances en qualité sont nettement moins bonnes pour d'autres types de signaux tels que des signaux de musique.

D'autres types de codeurs, tels que les codeurs à décomposition en sous-bandes, ne reposent pas sur une modélisation de la source de signal, mais visent à quantifier les formes d'ondes du signal. Ces codeurs acceptent une plus grande diversité de types de signaux d'entrée, mais ils présentent un moins bon compromis qualité/débit pour un type de signal donné tel que la parole.

WO97/14229 décrit un procédé de codage d'au moins un signal audio, comprenant la production d'un premier signal codé par codage du signal audio avec un débit binaire faible et un retard faible par rapport au retard occasionné par un codage de qualité plus élevée du signal audio, et la transmission du premier signal codé au décodeur avant la transmission au décodeur d'au moins un signal codé supplémentaire qui, isolément ou en combinaison avec le premier signal codé, fournit au décodage un signal décodé ayant la qualité plus élevée.

La présente invention a pour but de proposer un codeur audio à débit variable et capable de procurer une grande qualité de codage à bas débit pour différents types de sources.

L'invention propose ainsi un codeur audio, tel que défini dans la revendication 1.

Le noyau codeur consiste typiquement en un codeur normalisé, conçu et développé pour un type de source donné. Il peut être un codeur de parole, tel que par exemple le codeur G.723 normalisé par l'ITU-T. Si le signal audio est un signal de parole, le codeur selon l'invention est alors capable de procurer une bonne qualité de codage à bas débit (6,3 kbit/s dans le cas de G.723).

Pour un débit plus élevé, le signal d'erreur issu du noyau codeur est à son tour codé. La décomposition en sous-bandes permet une quantification précise de ce signal d'erreur. On obtient ainsi une bonne qualité de codage de signaux autres que de parole pour des débits relativement bas. Pour un signal de parole, le filtrage du signal d'erreur décomposé en sous-bandes assure une très bonne qualité globale de codage.

Il est d'ailleurs possible d'adapter le codeur à différents débits en privilégiant les paramètres de codage issus des sous-bandes où les composantes du signal d'erreur sont les plus importantes.

Dans une réalisation préférée du codeur selon l'invention, le signal audio de base n'est pas le signal d'entrée du codeur. Un banc de filtres de décomposition en sous-bandes du signal audio d'entrée produit ce signal de base comme composante aux plus basses fréquences, et en outre des signaux de bandes élevées comme composantes à des fréquences supérieures. Les signaux de bandes élevées sont codés par des modules de codage respectifs du premier étage qui produisent des paramètres de codage des signaux de bandes élevées, fournis aux multiplexeurs.

Cette structure permet au codeur selon l'invention de traiter des signaux de largeur de bande supérieure à celle prévue pour le noyau codeur. Le codeur peut d'ailleurs s'adapter à différentes largeurs de bande et/ou à différentes fréquences d'échantillonnage du signal d'entrée.

Le second étage de codage peut comporter en outre des modules de codage respectifs codant des signaux d'erreur supplémentaires produits par les modules du premier étage lors du codage des signaux de bande élevée.

Les paramètres de codage issus de ces modules du second étage peuvent également être inclus ou non dans le flux binaire de sortie selon le débit de sortie requis.

D'autres particularités et avantages de la présente invention apparaîtront dans la description ci-après d'exemples de réalisation non limitatifs, en référence aux dessins annexés, dans lesquels :
- la figure 1 est un schéma synoptique d'un codeur audio selon l'invention ; et
- la figure 2 est un schéma synoptique d'un décodeur associé.

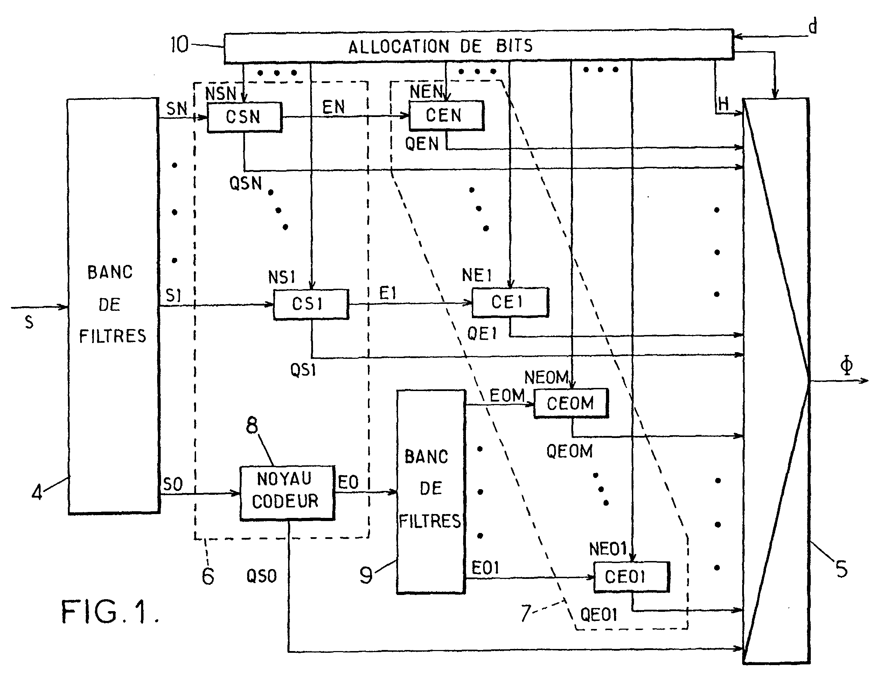

Dans le codeur représenté sur la figure 1, le signal audio numérique à coder S est appliqué à un banc de filtres 4 qui en opère une décomposition en sous-bandes.

Le signal d'entrée S est ainsi décomposé en un signal de base S0 et en un nombre N de signaux de bandes élevées S1-SN. La décomposition en sous-bandes peut être linéaire, chaque sous-bande ayant alors la même largeur spectrale, ou non linéaire. Dans ce dernier cas, les sous-bandes peuvent correspondre à l'échelle des Barks (voir E. Zwicker et al., « Psychoacoustique, l'oreille récepteur d'informations », Editions Masson, Paris, 1981). Si la bande passante du signal d'entrée ne dépasse pas 8 kHz, l'utilisation d'une échelle de Barks dans le banc de filtres 4 n'améliore pas sensiblement l'efficacité du codage, de sorte qu'on peut se dispenser de la plus grande complexité que requiert une décomposition en sous-bandes selon cette échelle.

Pour que le processus de décomposition en sous-bandes ne dégrade pas le signal d'entrée, on utilise un banc de filtres à reconstruction parfaite, constitué par exemple de filtres QMF, ou de préférence de filtres à décomposition en ondelettes de 36 coefficients.

Dans la suite de la présente description, on considérera, sans que ceci soit limitatif, que le signal de base S0 correspond à une bande de base de 0 à 4 kHz, et que les signaux de bandes élevées S1, S2, etc... correspondent aux bandes 4-5 kHz, 5-6 kHz, 6-7 kHz, 7-8 kHz, 8-10 kHz, 10-12 kHz, 12-14 kHz, 14-16 kHz, 16-20 kHz, 20-24 kHz et 24-32 kHz. Une telle croissance de la largeur de bande peut être vue comme une approximation de l'échelle des Barks qu'on peut réaliser avec un banc de filtres de complexité réduite. La liste des bandes élevées donnée ci-dessus correspond au cas où N = 11 et convient pour un signal d'entrée dont la bande passante va jusqu'à 32 kHz (fréquence d'échantillonnage de 64 kHz). Pour de moins grandes bandes passantes, le nombre N est plus petit, et seules les N premières bandes de la liste ci-dessus sont utilisées.

Chacun des signaux de bandes élevées S1-SN est soumis à un module de codage respectif CS1-CSN. Chaque module de codage CSn (1≤n≤N) opère une quantification vectorielle du signal Sn qui lui est soumis. Ce signal est découpé en segments successifs formés d'échantillons numériques à une cadence d'échantillonnage moins élevée que celle du signal d'entrée S. Pour chaque segment, le codeur CSn sélectionne une forme d'onde dans un dictionnaire prédéterminé et un gain tels que le signal estimé S'n constitué par cette forme d'onde multipliée par ce gain présente un écart minimal avec le signal Sn. Cet écart constitue un signal d'erreur de quantification, noté En sur le dessin (1≤n≤N). Les méthodes de quantification vectorielle sont bien connues dans le domaine du traitement des signaux audio (voir N. Moreau : « Techniques de compression des signaux », Editions Masson, collection CNET, Paris 1995). Sur chaque fenêtre temporelle constituée par un ou plusieurs segments successifs, les formes d'onde et les gains sélectionnés sont quantifiés sur un nombre NSn de bits. Ces NSn bits forment des paramètres QSn de codage du signal Sn qui sont fournis au multiplexeur 5 formant le flux binaire Φ de sortie du codeur.

Les modules de codage CSn font partie d'un premier étage de codage 6. Le codeur de la figure 1 comporte un second étage de codage 7 incluant N modules CE1-CEN de quantification vectorielle des signaux d'erreur E1-EN respectivement délivrés par les modules CS1-CSn du premier étage. Chaque module CEn (1≤n≤N) procède à la quantification vectorielle du signal d'erreur En pour produire des paramètres de codage QEn, représentés par NEn bits sur chaque fenêtre, et qui sont fournis au multiplexeur de sortie 5.

Pour le codage du signal de base S0, le premier étage 6 comporte un noyau codeur 8 constitué par un codeur normalisé. Des exemples de codeurs normalisés utilisables sont le codeur G.723 (voir « Dual Rate Speech Coder for Multimedia Communication Transmitting at 5.3 and 6.3 kbit/s », Recommandation ITU-T G.723.1, Mars 1996), et le codeur TETRA (voir « Radio Equipment and Systems (RES), Trans-European Trunked Radio (TETRA), Speech codec for full-rate traffic channel, Part 2 : TETRA codec », Recommandation ETSI, Del ETS 300 395-2, 6 Décembre 1996). Ces exemples de codeurs sont des codeurs de parole à analyse par synthèse, c'est-à-dire qu'ils procèdent en minimisant un signal d'erreur E0 égal à la différence entre le signal S0 fourni au noyau codeur et un signal synthétique S'0 construit à partir des paramètres de codage QS0 sélectionnés. Ces paramètres QS0 sont fournis au multiplexeur de sortie 5.

Le signal d'erreur E0 est également disponible en sortie du noyau codeur 8. Ce signal d'erreur est, conformément à l'invention, soumis à un autre banc de filtres 9 à décomposition en sous-bandes.

Le banc de filtres 9 est de même nature que le banc de filtres 4. Il opère une décomposition linéaire du signal E0 en M sous-bandes. Le nombre M est par exemple égal à 8, ce qui donne, dans l'exemple précédemment considéré où le signal de base S0 est dans la bande 0-4 kHz, des sous-bandes de largeur 0,5 kHz (échantillonnage à 1 kHz) en sortie du banc de filtres 9.

Les M composantes spectrales du signal d'erreur E0 fournies par le banc de filtres 9 sont notées E01 à E0M. Chacune de ces composantes E0m (1≤m≤M) est soumise à un module de codage respectif CE0m appartenant au second étage 7 du codeur. Ces modules CE0m opèrent par quantification vectorielle, de la même manière que les modules CEn précédemment décrits. Les paramètres de codage délivrés par le module CE0m sont notés QE0m, et représentent un nombre NE0m de bits par fenêtre, qui sont fournis au multiplexeur de sortie 5.

Les nombres de bits NSn, NEn et NE0m sont fournis aux différents modules de quantification vectorielle par une unité 10 d'allocation de bits. Cette unité 10 construit également un en-tête H pour le flux de sortie Φ du codeur. Cet en-tête H décrit la distribution des bits dans le flux binaire. L'unité 10 commande également le multiplexeur 5 pour construire le flux Φ.

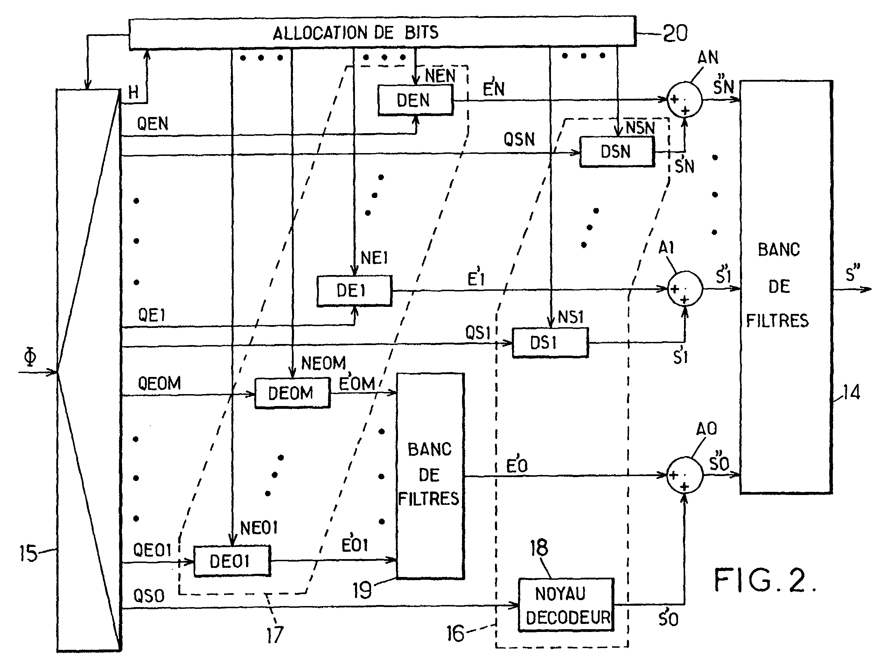

Le décodeur dual représenté sur la figure 2 comporte un démultiplexeur 15 recevant le flux Φ issu du codeur. Le démultiplexeur 15 extrait l'en-tête H et l'adresse à une unité 20 d'allocation de bits. L'unité 20 analyse alors la structure du flux et commande de façon correspondante le démultiplexeur 15 pour qu'il délivre les paramètres pertinents pour les différents modules du décodeur.

Le décodeur comporte un ensemble de modules 17 assurant les opérations inverses des modules de codage du second étage 7 du codeur. L'ensemble 17 comprend ainsi N modules de décodage DE1-DEN qui reconstruisent les estimations E'1-E'N des signaux d'erreur E1-EN, à partir des paramètres de codage QE1-QEN extraits par le démultiplexeur 15. L'ensemble 17 comprend également M modules de décodage DE01-DE0M qui reconstruisent les estimations E'01-E'0M des composantes en sous-bandes E01-E0M du signal d'erreur E0, à partir des paramètres de codage QE01-QE0M extraits par le démultiplexeur 15.

Un banc de filtres de recomposition 19, correspondant au banc de filtres de décomposition 9 du codeur, forme l'estimation E'0 du signal d'erreur E0 à partir des M estimations E'0m de ses composantes en sous-bandes.

Un autre ensemble de modules 16 effectue les opérations de décodage correspondant aux codages effectués dans le premier étage 6 du codeur. Cet ensemble 16 comprend un noyau décodeur 18 qui est un décodeur normalisé associé au noyau codeur 8. Il reconstruit le signal synthétique S'0 du codeur à analyse par synthèse à partir des paramètres de codage QS0 extraits par le démultiplexeur 15. L'ensemble 16 comporte en outre N modules de décodage DS1-DSN qui reconstruisent les estimations S'1-S'N des signaux de bandes élevées S1-SN à partir des paramètres de codage QS1-QSN extraits par le démultiplexeur 15.

N+1 additionneurs A0-AN produisent les N+1 estimations améliorées S"0-S"N des composantes spectrales du signal d'entrée, qui sont soumises à un banc de filtres de recomposition 14. L'additionneur An (0≤n≤N) effectue l'opération S"n = S'n + E'n. Le banc de filtres de recomposition 14 correspond au banc de filtres de décomposition 4 du codeur. Il délivre l'estimation finale S" du signal audio d'origine.

Le codeur décrit ci-dessus utilise un étage 6 de codage principal et un étage 7 d'amélioration par quantification des erreurs. Bien entendu, il serait possible de prévoir d'autres étages d'amélioration, un second étage d'amélioration (c'est-à-dire un troisième étage du codeur) procédant alors à une quantification vectorielle des erreurs résiduelles des différents modules de codage du second étage, et ainsi de suite. De façon correspondante, le décodeur associé comporterait alors d'autres ensembles de modules de décodage du type de l'ensemble 17 représenté sur la figure 2.

Le mode d'allocation des bits entre les différents modules de codage dépend de l'application considérée.

L'allocation des bits peut notamment être fixe. Le Tableau I présente un exemple numérique de répartition du débit binaire du flux de sortie entre les différentes sous-bandes et entre les deux étages du codeur (en excluant le débit relatif au noyau codeur). Dans cet exemple numérique, on a choisi N=4 et un signal de base S0 dans la bande 0-4 kHz, échantillonné à 8 kHz. Le signal d'entrée S a donc une bande passante de 8 kHz. Le noyau codeur 8 est par exemple un codeur G.723 de débit 6,3 kbit/s. Les quantifications vectorielles sont opérées sur des fenêtres de 64 échantillons, divisées chacune en quatre segments de 16 échantillons. Les fenêtres sont de 64 ms pour les modules CE01-CE08 et de 32 ms pour les modules CS1-CS4 et CE1-CE4, avec NEO1=65 (dictionnaire de 4096 formes d'ondes), NE02=61 (dictionnaire de 2048 formes d'ondes), NE0m=57 pour m=3,4,5 (dictionnaires de 1024 formes d'ondes), NE0m=53 pour m=6,7,8 (dictionnaires de 512 formes d'ondes), et NSn=58, NEn=56 pour n=1,2,3,4 (dictionnaires de 1024 formes d'ondes).

**Tableau I**

| Sous-bande (kHz) | Débit 1^{er} étage (kbit/s) | Débit 2^{ème} étage (kbit/s) | Total par sous-bande (kbit/s) |
|---|---|---|---|
| 0 - 0,5 | - | 1,015625 | 1,015625 |
| 0,5 - 1 | - | 0,953125 | 0,953125 |
| 1 - 1,5 | - | 0,890625 | 0,890625 |
| 1,5 - 2 | - | 0,890625 | 0,890625 |
| 2 - 2,5 | - | 0,890625 | 0,890625 |
| 2,5 - 3 | - | 0,828125 | 0,828125 |
| 3 - 3,5 | - | 0,828125 | 0,828125 |
| 3,5 - 4 | - | 0,828125 | 0,828125 |
| 4 - 5 | 1,8125 | 1,75 | 3,5625 |
| 5 - 6 | 1,8125 | 1,75 | 3,5625 |
| 6 - 7 | 1,8125 | 1,75 | 3,5625 |
| 7 - 8 | 1,8125 | 1,75 | 3,5625 |
| TOTAL | 7,25 | 14,125 | 21,375 |

De préférence, l'allocation des bits peut être modifiée en fonction du débit de sortie d du codeur, en ajoutant ou en supprimant des bandes de fréquences élevées et/ou des étages d'amélioration. Ceci permet au codeur selon l'invention de s'adapter au décodeur qui traitera son flux de sortie et à la bande passante du canal de transmission. Ceci est effectué très simplement en annulant certain des nombres de bits NEn, NSn ou NE0m fournis aux modules de codage.

Ainsi, dans l'exemple numérique du Tableau I et avec un noyau codeur de type G.723, le codeur selon l'invention peut avoir une gamme de débit allant de 6,3 kbit/s à 27,6 kbit/s environ selon la qualité et/ou le débit requis. On observe qu'on a une grande flexibilité et une grande finesse dans l'adaptation du débit du codeur.

L'unité d'allocation 10 peut également examiner les énergies respectives des signaux E0m,Sn,CEn fournis aux modules de codage afin de ne pas transmettre de paramètres de codage d'un signal qui serait d'énergie négligeable.

Plus généralement, l'unité 10 du codeur pourrait mettre en oeuvre des mécanismes d'allocation dynamique de bits, tels que ceux utilisés habituellement dans les codeurs en sous-bandes.

Le codeur selon l'invention peut également s'adapter à différentes largeurs de bande passante et/ou à différentes fréquences d'échantillonnage du signal d'entrée S. Pour cela, on peut ajouter des bandes élevées dans la décomposition initiale en sous-bandes du signal S. Le noyau codeur utilisé peut lui-même être sélectionné parmi plusieurs noyaux codeurs normalisés (G.723, Tetra, MPEG-2 AAC,...) prévus dans le codeur audio selon l'invention, ces différents noyaux codeurs permettant de traiter des signaux de bandes passantes et/ou de fréquences d'échantillonnage différentes.

## Revendications

1. Codeur audio, comprenant :
- un premier étage de codage (6) qui inclut un noyau codeur (8) recevant un signal audio de base (S0) et produisant d'une part des paramètres (QS0) de codage du signal de base et d'autre part un signal d'erreur (E0) correspondant à un écart entre le signal de base et un signal synthétique construit à partir desdits paramètres de codage ;
- un second étage de codage (7) ; et
- un multiplexeur (5) recevant les paramètres de codage du signal de base et des paramètres de codage supplémentaires issus du second étage de codage, et formant un flux binaire de sortie (Φ),
**caractérisé en ce qu'**il comprend en outre un banc de filtres (9) de décomposition en sous-bandes du signal d'erreur pour produire un ensemble de bandes spectrales (E0m) du signal d'erreur, et **en ce que** le second étage (7) inclut des modules respectifs (CE0m) de codage des bandes spectrales du signal d'erreur, produisant des paramètres (QE0m) de codage desdites bandes spectrales du signal d'erreur qui sont fournis au multiplexeur (5).

2. Codeur audio selon la revendication 1, comprenant un banc de filtres (4) de décomposition en sous-bandes d'un signal audio d'entrée (S), produisant ledit signal de base (S0) comme composante aux plus basses fréquences, et des signaux de bandes élevées (Sn) comme composantes à des fréquences supérieures, dans lequel les signaux de bandes élevées sont codés par des modules de codage respectifs (CSn) du premier étage (6) qui produisent des paramètres (QSn) de codage desdits signaux de bandes élevées, fournis au multiplexeur (5).

3. Codeur audio selon la revendication 2, dans lequel lesdits modules de codage (CSn) du premier étage (6) opèrent par quantification vectorielle des signaux de bandes élevées (Sn).

4. Codeur audio selon la revendication 2 ou 3, dans lequel chacun desdits modules de codage (CSn) du premier étage (6) produit en outre un signal d'erreur supplémentaire (En) correspondant à un écart entre l'un des signaux de bandes élevées (Sn) et un signal défini par les paramètres de codage produits par ledit module, et dans lequel le second étage de codage (7) inclut des modules respectifs (CEn) de codage des signaux d'erreur supplémentaires, produisant des paramètres (QEn) de codage desdits signaux d'erreur supplémentaires, fournis au multiplexeur (5).

5. Codeur audio selon l'une quelconque des revendications précédentes, dans lequel lesdits modules de codage (CE0m,CEn) du second étage (7) opèrent par quantification vectorielle.

6. Codeur audio selon l'une quelconque des revendications précédentes, comprenant des moyens d'allocation (10) pour déterminer, selon le débit binaire de sortie, le nombre (NE0m,NSn,NEn) de bits occupés dans le flux binaire de sortie (Φ) par chacun des paramètres (QE0m,NSn,NEn) produits par lesdits modules de codage (CE0m,CSn,CEn).

7. Codeur audio selon la revendication 6, dans lequel les moyens d'allocation (10) déterminent lesdits nombres de bits en tenant compte en outre des énergies respectives des signaux soumis (E0m,Sn,CEn) auxdits modules de codage.

## Patentansprüche

1. Audiocodierer, welcher aufweist:
- eine erste Codierungsstufe (6), die einen Codierungskern (8) beinhaltet, der ein Basisaudiosignal (S0) empfängt und zum einen Parameter (QS0) zum Codieren des Basissignals und zum anderen ein einem Abstand zwischen dem Basissignal und einem ausgehend von den Codierungsparametern erstellten synthetischen Signal entsprechendes Fehlersignal (E0) erzeugt;
- eine zweite Codierungsstufe (7); und
- einen Multiplexer (5), der die Parameter zum Codieren des Basissignals und von der zweiten Codierungsstufe stammende zusätzliche Codierungsparameter empfängt und einen binären Ausgangsfluß (Φ) bildet,
**dadurch gekennzeichnet, daß** er des weiteren einen Satz von Filtern (9) zum Zerlegen des Fehlersignals in Unterbänder zum Erzeugen einer Gesamtheit von Spektralbändern (E0m) des Fehlersignals aufweist, und daß die zweite Stufe (7) jeweilige Module (CE0m) zum Codieren der Spektralbänder des Fehlersignals beinhaltet, welche Parameter (QE0m) zum Codieren der Spektralbänder des Fehlersignals erzeugen, welche an den Multiplexer (5) geliefert werden.

2. Audiocodierer nach Anspruch 1, welcher einen Satz von Filtern (4) zum Zerlegen eines Audio-Eingangssignals (S) in Unterbänder aufweist, welcher das Basissignal (S0) als Komponente mit den tiefsten Frequenzen erzeugt, und Signale von höheren Bändern (Sn) als Komponenten mit höheren Frequenzen erzeugt, wobei die Signale von höheren Bändern durch jeweilige Codierungsmodule (CSn) der ersten Stufe (6) codiert werden, welche Parameter (QSn) zum Codieren der Signale der höheren Bänder erzeugen, welche an den Multiplexer (5) geliefert werden.

3. Audiocodierer nach Anspruch 2, bei dem die Codierungsmodule (CSn) der ersten Stufe (6) mittels vektorieller Quantifizierung der Signale der höheren Bänder (Sn) arbeiten.

4. Audiocodierer nach Anspruch 2 oder 3, bei dem jedes der Codierungsmodule (CSn) der ersten Stufe (6) des weiteren ein zusätzliches Fehlersignal (En) erzeugt, das einem Abstand zwischen einem der Signale der höheren Bänder (Sn) und einem durch die von dem Modul erzeugten Codierungsparameter definierten Signal entspricht, und bei dem die zweite Codierungsstufe (7) jeweilige Module (CEn) zum Codieren der zusätzlichen Fehlersignale beinhaltet, welche Parameter (QEn) zum Codieren der zusätzlichen Fehlersignale erzeugen, die an den Multiplexer (5) geliefert werden.

5. Audiocodierer nach einem der vorhergehenden Ansprüche, bei dem die Codierungsmodule (QE0m,CEn) der zweiten Stufe (7) mittels vektorieller Quantifizierung arbeiten.

6. Audiocodierer nach einem der vorhergehenden Ansprüche, welcher eine Zuordnungseinrichtung (10) aufweist, die gemäß dem Ausgangsbitdurchsatz die Anzahl (NE0m,NSn,NEn) von Bits bestimmt, die im binären Ausgangsfluß (Φ) von jedem der von den Codierungsmodulen (CE0m,CSn,CEn) erzeugten Parameter (QE0m,NSn,NEn) besetzt sind.

7. Audiocodierer nach Anspruch 6, bei dem die Zuordnungseinrichtung (10) die Anzahl von Bits bestimmt, indem sie des weiteren die jeweiligen Energien der Signale (E0m,Sn,CEn) berücksichtigt, die den Codierungsmodulen unterworfen sind.

## Claims

1. An audio encoder comprising:
- a first coding stage (6) which includes a core coder (8) receiving a base audio signal (S0) and generating coding parameters (QS0) for the base signal on the one hand and an error signal (E0) corresponding to a difference between the base signal and a synthetic signal constructed from said coding parameters, on the other hand;
- a second coding stage (7); and
- a multiplexer (5) receiving the coding parameters for the base signal and the coding parameters for the spectral bands of the error signal and forming a binary output flow (Φ),
**characterized in that** it further comprises a bank of filters (9) to perform a sub-band decomposition of the error signal in order to generate a set of spectral bands (E0m) of the error signal, and **in that** the second stage (7) includes respective coding modules (CE0m) for the spectral bands of the error signal to generate coding parameters (QE0m) for said spectral bands of the error signal, which are supplied to the multiplexer (5).

2. An audio encoder according to claim 1, comprising a bank of filters (4) to perform a sub-band decomposition of an input audio signal (S), generating said base signal (S0) as a lowest frequency component, and high-band signals (Sn) as higher frequency components, wherein the high-band signals are coded by respective coding modules (CSn) of the first stage (6) which generate coding parameters (QSn) for said high-band signals, applied to the multiplexer (5).

3. An audio encoder according to claim 2, wherein said coding modules (CSn) of the first stage (6) operate by a vector quantification the high-band signals (Sn).

4. An audio encoder according to claim 2 or 3, wherein each of said coding modules (CSn) of the first stage (6) further generates an additional error signal (En) corresponding to a difference between one of the high-band signals (Sn) and a signal defined by the coding parameters generated by said module, and wherein the second coding stage (7) includes respective modules (CEn) for coding the additional error signals, generating coding parameters (QEn) for said additional error signals, applied to the multiplexer (5).

5. An audio encoder according to any one of the preceding claims, wherein said coding modules (CE0m, CEn) of the second stage (7) operate by vector quantification.

6. An audio encoder according to any one of the preceding claims, comprising allocation means (10) for determining, depending on the binary output rate, the number (NE0m, NSn, NEn) of bits in the binary output flow (Φ) occupied by each of the parameters (QE0m, NSn, NEn) generated by said coding modules (CE0m, CSn, CEn).

7. An audio encoder according to claim 6, wherein the allocation means (10) determine said numbers of bits by also taking account the respective energies of the signals applied (E0m, Sn, CEn) to said coding modules.
